(19) Europäisches Patentamt
European Patent Office
Office européen des brevets

(11) Numéro de publication : **0 012 074**
**B1**

(12) **FASCICULE DE BREVET EUROPÉEN**

(45) Date de publication du fascicule du brevet : **09.06.82**

(51) Int. Cl.$^3$ : **G 21 C 19/30, C 22 B 9/02**

(21) Numéro de dépôt : **79400913.4**

(22) Date de dépôt : **23.11.79**

(54) **Procédé de nettoyage d'un piège froid pour métaux liquides et dispositif pour la mise en oeuvre de ce procédé.**

(30) Priorité : **04.12.78 FR 7834093**

(43) Date de publication de la demande : **11.06.80 (Bulletin 80/12)**

(45) Mention de la délivrance du brevet : **09.06.82 Bulletin 82/23**

(84) Etats contractants désignés : **BE DE GB IT NL**

(56) Documents cités :
**FR A 1 549 934**
**FR A 2 120 180**
**FR A 2 312 276**
**US A 3 831 912**
**US A 3 854 933**

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Maupre, Jean-Pierre**
**66, rue du Chanoine Trouillet**
**F-84120 Pertuis (FR)**
Inventeur : **Trouve, Jean**
**"La Bastidonne"**
**F-84120 Pertuis (FR)**

(74) Mandataire : **Mongrédien, André et al**
**c/o Brevatome 25, rue de Ponthieu**
**F-75008 Paris (FR)**

EP 0 012 074 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

# Procédé de nettoyage d'un piège froid pour métaux liquides et dispositifs pour la mise en œuvre de ce procédé

L'invention concerne un procédé de nettoyage d'un piège froid qui est incorporé dans un circuit de métal liquide. Ce type de piège est le plus fréquemment utilisé dans un circuit de sodium ou d'alliage sodium-potassium et il est destiné à effectuer la cristallisation et l'élimination des impuretés telles notamment que, dans le cas d'un circuit de sodium, l'hydrure de sodium et l'oxyde de sodium. Le nettoyage du piège permet soit de le réutiliser, soit de le stocker, de préférence après décontamination. L'invention a également pour objet un dispositif pour la mise en œuvre de ce procédé.

Dans les réacteurs nucléaires de puissances moyenne et forte, il est nécessaire de pouvoir disposer d'un fluide de refroidissement dont le coefficient de conductibilité thermique soit élevé de façon à pouvoir profiter au maximum des possibilités de puissance du réacteur. Pour cette raison, et malgré les difficultés que soulève par ailleurs l'utilisation de ces matériaux on utilise fréquemment des métaux liquides pour extraire la chaleur délivrée par de tels réacteurs. Parmi les métaux ainsi utilisés, on peut citer le sodium. En raison des conditions très particulières de circulation du métal liquide assurant le refroidissement du réacteur, il se forme dans ce métal des impuretés que l'on élimine à l'aide d'au moins un piège froid disposé dans le circuit. Les principales impuretés ainsi piégées sont, dans le cas du sodium, l'hydrure de sodium (NaH), l'oxyde de sodium ($Na_2O$) et l'hydroxyde de sodium (NaOH). En raison de la température du piège, ces impuretés se trouvent à l'état solide, de telle sorte qu'après une certaine durée d'utilisation du réacteur, il peut devenir nécessaire, en raison de la diminution du débit de sodium épuré et même du risque de colmatage, de protéger au nettoyage du ou des pièges disposés dans ce circuit.

On a déjà proposé différents procédés de nettoyage d'un piège froid incorporé dans un circuit de sodium.

Dans un premier procédé connu, le piège est chauffé aux environs de 420 °C et un balayage de gaz neutre est effectué. Dans ces conditions, l'hydrure de sodium se décompose selon la réaction (1) ci-dessous :

$$(1)\ NaH\ (s) \rightarrow L_1 + 1/2\ H_2\ (g)$$

où $L_1$ est une solution liquide dans le sodium, d'hydrogène ainsi que d'oxygène, celui-ci provenant de l'oxyde de sodium qui est toujours présent dans le piège froid en même temps que l'hydrure.

Ce procédé permet donc la décomposition totale de l'hydrure de sodium. Par contre, une faible fraction seulement de l'oxyde de sodium est convertie en hydroxyde, selon la réaction (2) ci-dessous :

$$(2)\ Na_2O\ (s) + 1/2\ H_2\ (g) \rightarrow L_1 + L_2$$

où $L_2$ est une solution liquide d'hydrogène et d'oxygène dans l'hydroxyde de sodium.

En effet, la cinétique lente de cette dernière réaction ne permet pas son accomplissement pendant la durée du nettoyage. Ce procédé n'est donc pas adapté puisqu'il ne permet pas dans des délais raisonnables d'obtenir la transformation totale de l'oxyde de sodium. En outre, le tritium présent dans le piège froid est rejeté dans les effluents gazeux, ce qui constitue un inconvénient.

Selon un autre procédé de nettoyage décrit dans le brevet français n° 2 312 276, on transforme l'hydrure de sodium et l'oxyde de sodium en hydroxyde de sodium par réaction mutuelle au-delà de 410 °C. La réaction qui se produit est la suivante :

$$(3)\ NaH\ (s) + Na_2O\ (s) \rightarrow L_1 + L_2$$

Si l'hydrure de sodium est en excès par rapport à l'oxyde de sodium dans le piège, l'hydrure est éliminé par décomposition comme dans le procédé décrit précédemment selon la réaction (1). Au contraire, si c'est l'oxyde de sodium qui est en excès, il est transformé en hydroxyde de sodium par hydrogénation selon la réaction (2).

Ce procédé a l'avantage d'être plus complet que le précédent puisqu'il permet de transformer à la fois l'hydrure de sodium et l'oxyde de sodium, mais il présente également, comme le premier procédé, les inconvénients de devoir être mis en œuvre à une température supérieure à 410 °C et d'être un procédé lent.

La présente invention a pour objet un procédé de nettoyage d'un piège froid disposé dans un circuit dans lequel circule un métal liquide. Ce procédé peut être mis en œuvre à des températures inférieures à 410 °C, est particulièrement rapide, et permet un nettoyage total du piège car on élimine à la fois, dans le cas d'un circuit de sodium, l'hydroxyde de sodium, l'oxyde de sodium et l'hydrure de sodium sous forme d'effluents liquides dont la purge peut être facilement effectuée.

Dans ce but, selon l'invention, le procédé de nettoyage d'un piège froid incorporé dans un circuit d'un métal liquide, ou d'un mélange de métaux liquides, dans lequel piège se déposent des impuretés comprenant notamment de l'hydrure et de l'oxyde du métal liquide (ou des métaux liquides) considéré(s), est caractérisé en ce qu'il comprend les étapes successives suivantes :

— introduction dans le piège d'un hydroxyde métallique alcalin, à l'état liquide, en excès par rapport aux limites de solubilité de l'hydrure et de l'oxyde,

— chauffage du piège jusqu'à transformation totale des impuretés en phases liquides,

— vidange des phases liquides contenues

dans le piège.

Ce procédé s'applique notamment au cas où le métal liquide est constitué par du sodium.

Selon une caractéristique secondaire de l'invention, l'hydroxyde métallique alcalin est de l'hydroxyde de sodium, et le chauffage du piège a pour conséquence de transformer les impuretés en une première phase liquide constituée par une solution d'hydrogène et d'oxygène dans du sodium et en une seconde phase liquide constituée par une solution d'hydrogène et d'oxygène dans l'hydroxyde de sodium. De préférence, on établit le vide préalablement à l'étape d'introduction de l'hydroxyde de sodium dans le piège froid afin d'éliminer les traces d'eau risquant éventuellement d'être contenues dans l'hydroxyde de sodium et de venir, par la suite, en contact avec le sodium.

L'invention concerne également un dispositif de nettoyage d'un piège froid, pour la mise en œuvre du procédé d'épuration qui vient d'être défini, ce dispositif se caractérisant en ce qu'il comprend un pot destiné à recevoir l'hydroxyde métallique alcalin disposé au-dessus du piège, une première vanne permettant l'introduction de l'hydroxyde métallique contenu dans le pot à l'intérieur du piège et une seconde vanne permettant la vidange du piège.

Selon une variante de réalisation, le dispositif comprend un pot de vidange disposé au-dessous du piège.

Selon une caractéristique secondaire de l'invention, un dispositif de chauffage est associé au pot (ou aux pots) et au piège.

Selon encore une autre caractéristique secondaire de l'invention, le pot (ou les pots) et le piège comprennent chacun une tubulure de réglage de pression et un manomètre.

On décrira maintenant, à titre d'exemple non limitatif, un mode de réalisation particulier de l'invention en se référant à la figure unique qui représente un dispositif pour le nettoyage d'un piège froid disposé dans un circuit dans lequel circule un métal liquide.

Le dispositif de nettoyage représenté sur la figure unique comprend trois étages superposés constitués par un pot supérieur 10, le piège 12 et un pot inférieur 14. Un conduit 16 contrôlé par une vanne 18 est disposé entre le pot supérieur 10 et le piège froid 12, et un conduit 20 contrôlé par une vanne 22 est disposé entre le piège froid 12 et le pot inférieur 14. En outre, une vanne de vidange 24 est prévue à la base du pot inférieur 14.

Le piège froid 12 est incorporé dans un circuit d'un réacteur nucléaire dans lequel circule un métal liquide, par exemple du sodium. Le piège 12 communique avec le circuit de sodium (non représenté) au moyen d'une tuyauterie d'entrée 28 et d'une tuyauterie de sortie 30, chaque tuyauterie étant munie d'une vanne d'arrêt désignée respectivement par les références 29 et 31. La tuyauterie 28 se raccorde au conduit 16 en dessous de la vanne 18.

De façon connue, le sodium qui pénètre par la tuyauterie 28 dans le piège 12 descend à la base de celui-ci pour traverser une zone de rétention 32 constituée par une laine d'acier inoxydable. Sous l'effet du refroidissement créé par une circulation d'azote 33 autour du piège 12, les impuretés contenues dans le sodium se déposent à l'état solide dans la zone de rétention 32. Le sodium épuré remonte par un tube central 34 puis traverse un échangeur-économiseur 36 avant de ressortir du piège 12 par la tuyauterie 30.

Comme le montre la figure unique, le pot supérieur 10 comprend une tubulure 38 de réglage de pression qui permet à volonté d'établir le vide ou d'injecter un gaz neutre. La pression régnant dans le pot est mesurée à l'aide d'un manomètre 40. De même, le piège 12 et le pot inférieur 14 comprennent chacun une tubulure de réglage de pression 42, 39 ainsi qu'un manomètre 44, 41. Enfin, les pots 10, 14 et le piège 12 sont entourés d'une ou plusieurs résistances chauffantes 46, 48 et 50 respectivement noyées dans des blocs calorifugés 52, 54 et 56 qui peuvent être constitués par un bloc unique ou par deux ou trois blocs séparés.

Lorsque la laine d'acier inoxydable constituant la zone de rétention 32 a emmagasiné une quantité importante d'impuretés comprenant notamment de l'hydrure de sodium, de l'oxyde de sodium et de l'hydroxyde de sodium, il devient nécessaire, en raison des risques de colmatage ou de diminution du débit de sodium épuré, de nettoyer le piège froid 12. Avant de procéder à cette opération, le piège froid est purgé par ouverture des vannes 22 et 24 après isolation du piège par rapport au reste du circuit par fermeture des vannes 29 et 31.

Les vannes 22 et 24 sont ensuite fermées et de l'hydroxyde de sodium est introduit dans le pot supérieur 10 et amené à l'état liquide à l'aide des résistances chauffantes 46 jusqu'à une température d'environ 350 °C. On fait le vide par la tubulure 38 de façon à éliminer les traces d'eau éventuelles. On place ensuite l'hydroxyde de sodium sous atmosphère de gaz neutre, par exemple d'argon, introduit par la tubulure 38.

Après chauffage du piège 12 et après avoir amené celui-ci au moyen de la tubulure 42, à une pression inférieure à celle du pot 10, la vanne 18 est ouverte de telle sorte qu'une quantité d'hydroxyde de sodium 58 en excès par rapport aux limites de solubilité de l'hydrure de sodium et de l'oxyde de sodium contenus dans la zone de rétention 32 à la température considérée est introduite à l'intérieur du piège froid 12 par le conduit 16. Ainsi, si la température de chauffage est fixée à 355 °C, on introduira au moins 79 moles % d'hydroxyde de sodium, les impuretés piégées comprenant par ailleurs 16 moles % d'hydrure de sodium et 5 moles % d'oxyde de sodium. Si la quantité d'hydroxyde introduite est plus faible, la température de chauffage devra être augmentée afin de nettoyer totalement le piège. La température à l'intérieur du piège 12 étant maintenue aux environs de 355 °C pendant environ une heure grâce aux résistances chauffantes 48, l'hydrure de sodium et l'oxyde de sodium qui se trouvent piégés dans la zone de rétention 32 se dissolvent complètement dans l'hydroxyde de sodium selon les réactions de transformation suivantes :

$$(4)\ NaH\ (s) + NaOH\ (1) \rightarrow L_2$$
$$(5)\ Na_2O\ (s) + NaOH\ (1) \rightarrow L_2$$
$$(6)\ NaH\ (s) + Na_2O\ (s) + NaOH\ (1) \rightarrow L_2$$
$$(7)\ NaH\ (s) + Na_2O\ (s) + NaOH\ (1) \rightarrow L_1 + L_2$$

où, comme on l'a indiqué précédemment, $L_1$ est une phase liquide qui est constituée par une solution d'hydrogène et d'oxygène dans le sodium, et où $L_2$ est une phase liquide qui est une solution d'hydrogène et d'oxygène dans l'hydroxyde de sodium.

On a intérêt à remplir totalement d'hydroxyde de sodium le volume interne du piège 12 pour les raisons suivantes :

— on assure ainsi la dissolution des impuretés éventuellement déposées dans la partie supérieure du piège ;

— du fait que l'on minimise le volume libre au-dessus de la surface du liquide contenu dans le piège, on minimise par-là-même le rejet du tritium dans ce volume libre, le tritium restant alors dans le liquide.

Par ailleurs, dans le cas où le piège contiendrait des dépôts adhérents difficiles à dissoudre, on pourrait faciliter la dissolution en créant une circulation d'hydroxyde de sodium en circuit fermé entre le pot 10 et le piège 12, grâce à une tuyauterie non représentée.

Afin de maintenir les phases $L_1$ et $L_2$ à l'état liquide, le chauffage du piège 12 à l'aide des résistances 48 se poursuit jusqu'à l'ouverture de la vanne de vidange 22. Au préalable, le pot inférieur de vidange 14 est chauffé au moyen de la résistance chauffante 50 et amené, grâce à la tubulure 39, à une pression inférieure à celle du piège 12. Enfin, ce pot, est lui-même vidangé au moyen de la vanne 24 dans un (ou plusieurs) récipient(s) approprié(s).

On peut, si on le désire, recueillir à partir du pot 14 les phases liquides $L_1$ et $L_2$ dans des récipients séparés en mettant à profit la différence de densité de ces deux phases, la phase $L_2$ étant plus dense que la phase $L_1$.

Le dispositif de nettoyage décrit dans cet exemple, ainsi que le procédé dont il assure la mise en œuvre permettent ainsi de réaliser de façon simple et rapide, de l'ordre de 1 heure, le nettoyage du piège 12, tout en obtenant des effluents à l'état liquide.

La température de nettoyage (environ 350 °C) est moins élevée que dans les procédés de l'art antérieur, ce qui diminue la corrosion du piège par l'hydroxyde de sodium, car celle-ci augmente avec la température. La mise en œuvre du procédé peut être effectuée dans un appareillage simple qui, du fait que la température de nettoyage est moins élevée, travaille sous une pression d'hydrogène plus faible que dans les procédés de l'art antérieur. Il en résulte qu'on minimise la quantité de tritium rejetée dans les effluents gazeux. En effet, la majeure partie du tritium se trouve piégée dans les phases liquides et peut donc être récupérée par un traitement ultérieur.

En plus de l'élimination de l'hydrure de sodium et de l'oxyde de sodium piégés dans la zone de rétention 32, ce procédé permet également d'éliminer le carbonate de sodium $Na_2CO_3$ qui est soluble de façon sensible dans l'hydroxyde de sodium. Ce carbonate de sodium peut être présent dans les impuretés retenues dans le piège.

L'invention n'est nullement limitée à l'exemple de réalisation qui vient d'être plus spécialement décrit et représenté ; elle en embrasse au contraire toutes les variantes.

C'est ainsi qu'une variante du dispositif représenté consiste à supprimer le pot inférieur de vidange 14 et à effectuer la vidange du piège 12, après nettoyage de celui-ci, dans le pot supérieur 10 à l'aide d'une tuyauterie (non représentée) et en établissant dans le pot 10 une pression inférieure à celle de l'intérieur du piège 12.

Dans une variante du procédé qui vient d'être décrit, on peut remplacer l'hydroxyde de sodium par un autre hydroxyde métallique alcalin et notamment par de l'hydroxyde de potassium dont le prix de revient est sensiblement du même ordre et dont les propriétés physiques et chimiques sont voisines. C'est ainsi que le point de fusion de l'hydroxyde de sodium est de 318 °C alors que le point de fusion de l'hydroxyde de potassium est de 360 °C.

Enfin, bien que l'exemple qui vient d'être plus spécialement décrit est relatif à un circuit de sodium, l'invention peut s'appliquer à d'autres métaux liquides ou à des mélanges de métaux liquides, par exemple, sodium-potassium.

**Revendications**

1. Procédé de nettoyage d'un piège froid incorporé dans un circuit d'un métal liquide ou d'un mélange de métaux liquides, dans lequel piège se déposent des impuretés comprenant notamment de l'hydrure et de l'oxyde du métal liquide (ou des métaux liquides) considéré(s), ce procédé étant caractérisé en ce qu'il comprend les étapes successives suivantes :

— introduction dans le piège d'un hydroxyde métallique alcalin, à l'état liquide, en excès par rapport aux limites de solubilité de l'hydrure et de l'oxyde,

— chauffage du piège jusqu'à transformation totale des impuretés en phases liquides,

— vidange des phases liquides contenues dans le piège.

2. Procédé de nettoyage selon la revendication 1, caractérisé en ce que le métal liquide est constitué par du sodium.

3. Procédé de nettoyage selon les revendications 1 et 2, caractérisé en ce que l'hydroxyde métallique alcalin est de l'hydroxyde de sodium et en ce que le chauffage du piège a pour conséquence de transformer les impuretés en une

première phase liquide constituée par une solution d'hydrogène et d'oxygène dans du sodium et en une seconde phase liquide constituée par une solution d'hydrogène et d'oxygène dans l'hydroxyde de sodium.

4. Procédé de nettoyage selon la revendication 3, caractérisé en ce que l'on introduit de l'hydroxyde de sodium préalablement débarrassé de son humidité par chauffage sous vide.

5. Dispositif de nettoyage d'un piège (12) froid pour la mise en œuvre du procédé selon l'une quelconque des revendications précédentes, caractérisé en ce qu'il comprend un pot (10) destiné à recevoir l'hydroxyde métallique alcalin disposé au-dessus du piège (12) une première vanne (18) permettant l'introduction de l'hydroxyde métallique contenu dans le pot à l'intérieur du piège et une seconde vanne (22) permettant la vidange du piège.

6. Dispositif de nettoyage selon la revendication 5, caractérisé en ce qu'il comprend un pot de vidange (14) disposé au-dessous du piège (12).

7. Dispositif de nettoyage selon l'une quelconque des revendications 5 et 6, caractérisé en ce qu'un dispositif de chauffage (46, 48 et 50) est associé au pot (ou aux pots) et au piège.

8. Dispositif de nettoyage selon l'une quelconque des revendications 5 à 7, caractérisé en ce que le pot (ou les pots) et le piège comprennent chacun une tubulure (30, 38 et 39) de réglage de pression et un manomètre (40, 41 et 44).

**Claims**

1. Process for cleaning a cold trap of a circuit of a liquid metal or mixture of liquid metals, in which trap are deposited impurities comprising especially the hydride or oxide of the said liquid metal or metals, said process being characterized in that it comprises the following successive steps :

— introduction into the trap of an alkali metal hydroxide, in the liquid state and in excess relative to the solubility limits of the hydride and oxide,

— heating the trap until there is total transformation of the impurities into the liquid phase, and

— drainage of the liquid phases contained in the trap.

2. Cleaning process according to Claim 1 characterized in that the liquid metal is sodium.

3. Cleaning process according to Claims 1 and 2 characterized in that the alkali metal hydroxide is sodium hydroxide and in that the heating of the trap results in the transformation of the impurities into a first liquid phase constituted by a solution of hydrogen and oxygen in sodium, and a second liquid phase constituted by a solution of hydrogen and oxygen in sodium hydroxide.

4. Cleaning process according to Claim 3 characterized in that the sodium hydroxide is introduced after desiccation by heating under vacuum.

5. Cleaning apparatus for a cold trap (12) for carrying out a process according to any one of the preceding Claims, characterized in that it comprises a chamber (10) for holding the alkali metal hydroxide disposed above the trap (12), a first valve (18), permitting the introduction of the metal hydroxide from the chamber into the interior of the trap, and a second valve (22) permitting drainage of the trap.

6. Cleaning apparatus according to Claim 5 characterized in that it comprises a drainage chamber (14) disposed below the trap (12).

7. Cleaning apparatus according to either of Claims 5 and 6 characterized in that a heating means (46, 48, 50) is associated with the chamber (or chambers) and the trap.

8. Cleaning apparatus according to any one of Claims 5 to 7 characterized in that the chamber (or chambers) and the trap each comprise a pressure-regulating tube (30, 38, 39) and a manometer (40, 41, 44).

**Ansprüche**

1. Verfahren für die Reinigung einer in einem Leitungskreis für ein flüssiges Metall oder ein Gemisch von flüssigen Metallen angeordneten Kältefalle, in welcher sich verunreinigungen, insbesondere das Hydrid und das Oxid des oder der betreffenden flüssigen Metalls bzw. Metalle, sammeln, dadurch gekennzeichnet, daß das Verfahren die nachstehenden, aufeinander folgenden Schritte umfaßt :

— Eintrag eines alkalinen Metall-Hydroxids in flüssigem Zustand in die Falle und zwar im Überschuß, bezogen auf die Grenzen der Löslichkeit des Hydrids und des Oxids ;

— Beheizung der Falle bis zur vollständigen Überführung der Verunreinigungen in die flüssige Phase ;

— Ablassen der in der Falle enthaltenen flüssigen Phasen.

2. Reinigungsverfahren nach Anspruch 1, dadurch gekennzeichnet, daß das flüssige Metall Natrium ist.

3. Reinigungsverfahren nach Anspruch 1 und 2, dadurch gekennzeichnet, daß das alkaline Metall-Hydroxid Natriumhydroxid ist und daß die Beheizung der Falle zur Folge hat, daß die Verunreinigungen in eine aus einer Lösung von Wasserstoff und Sauerstoff in Natrium gebildete erste flüssige Phase und in eine aus einer Lösung von Wasserstoff und Sauerstoff in dem Natriumhydroxid gebildete zweite flüssige Phase umgewandelt werden.

4. Reinigungsverfahren nach Anspruch 3, dadurch gekennzeichnet, daß man das Natriumhydroxid nach vorheriger Befreiung von Feuchtigkeit durch Erhitzen im Vakuum einträgt.

5. Vorrichtung für die Reinigung einer Kältefalle (12) zum Durchführen eines Verfahrens nach einem der vorstehenden Ansprüche, gekennzeichnet durch einen oberhalb der Falle (12) angeordneten Behälter (10) für die Aufnahme des alkalinen Metall-Hydroxids ; durch ein erstes Absperrorgan (18) zum Einlassen des in dem Behälter enthaltenen Metall-Hydroxids in die Falle und durch ein zweites Absperrorgan (22) zum Entleeren der Falle.

6. Reinigungsvorrichtung nach Anspruch 5, dadurch gekennzeichnet, daß unterhalb der Falle (12) ein Ablaßbehälter (14) angeordnet ist.

7. Reinigungsvorrichtung nach Anspruch 5 und/oder 6, dadurch gekennzeichnet, daß dem oder den Behälter(n) und der Falle eine Heizeinrichtung (46, 48, 50) zugeordnet ist.

8. Reinigungsvorrichtung nach einem der Ansprüche 5 bis 7, dadurch gekennzeichnet, daß der oder die Behälter sowie die Falle jeweils eine Druckregelleitung (30, 38, 39) und einem Druckmesser (40, 41, 44) aufweisen.

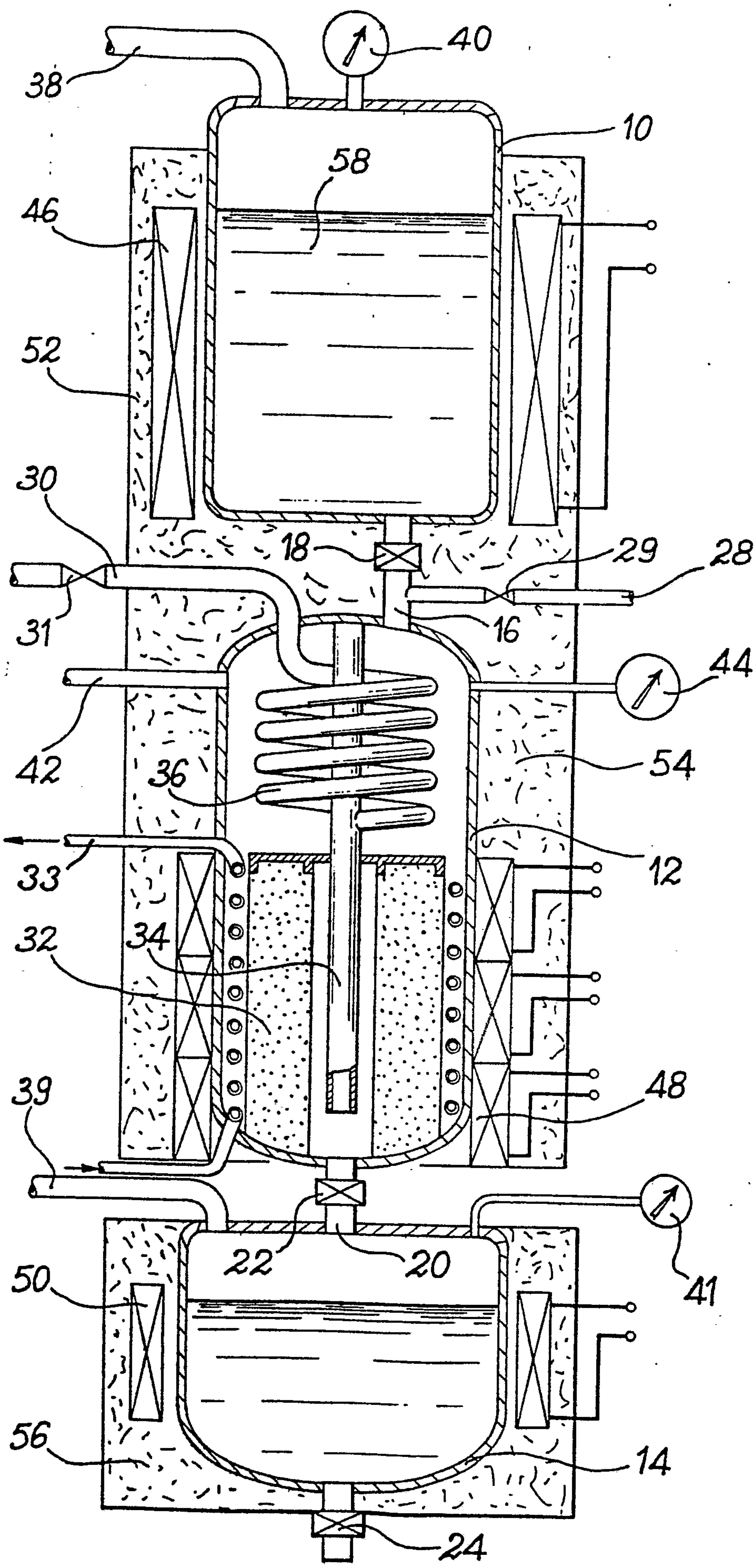
38
40
10
58
46
52
30
18
29
28
31
16
44
42
36
54
33
12
32
34
39
48
22
20
41
50
56
14
24